(19) Europäisches Patentamt
European Patent Office
Office européen des brevets

(11) **EP 3 396 576 B1**

(12) **EUROPEAN PATENT SPECIFICATION**

(45) Date of publication and mention
of the grant of the patent:
**06.05.2020 Bulletin 2020/19**

(51) Int Cl.:
*G06F 21/30* $^{(2013.01)}$          *H04W 12/06* $^{(2009.01)}$
*H04W 12/08* $^{(2009.01)}$         *H04L 29/06* $^{(2006.01)}$

(21) Application number: **16877786.0**

(22) Date of filing: **23.12.2016**

(86) International application number:
**PCT/CN2016/111725**

(87) International publication number:
**WO 2017/107976 (29.06.2017 Gazette 2017/26)**

(54) **CLIENT APPARATUS, SERVER APPARATUS AND ACCESS CONTROL SYSTEM FOR AUTHORIZED ACCESS**

CLIENT-VORRICHTUNG, SERVERVORRICHTUNG UND ZUGANGSKONTROLLSYSTEM FÜR BERECHTIGTEN ZUGRIFF

APPAREIL CLIENT, APPAREIL SERVEUR ET SYSTÈME DE CONTRÔLE D'ACCÈS POUR UN ACCÈS AUTORISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2015 CN 201510977455**

(43) Date of publication of application:
**31.10.2018 Bulletin 2018/44**

(73) Proprietor: **Sony Corporation**
**Tokyo 108-0075 (JP)**

(72) Inventor: **ZHANG, Zhihui**
**Beijing 100028 (CN)**

(74) Representative: **D Young & Co LLP**
**120 Holborn**
**London EC1N 2DY (GB)**

(56) References cited:
**CN-A- 101 663 670          CN-A- 103 955 532**
**CN-A- 104 735 164          US-A1- 2015 149 209**
**US-A1- 2015 244 690**

- **D Hardt: "RFC 6749 The OAuth 2.0 Authorization Framework", , 31 October 2012 (2012-10-31), pages 1-76, XP055218558, Retrieved from the Internet: URL:https://www.rfc-editor.org/rfc/pdfrfc/ rfc6749.txt.pdf [retrieved on 2015-10-06]**
- **Anonymous: "Blockchain - Wikipedia", , 16 December 2015 (2015-12-16), XP055497899, Retrieved from the Internet: URL:https://en.wikipedia.org/w/index.php?t itle=Blockchain&oldid=695470105 [retrieved on 2018-08-07]**

**Description**

The application claims the priority of Chinese Patent Application No. 201510977455.3, titled "CLIENT APPARATUS, SERVER APPARATUS AND ACCESS CONTROL SYSTEM FOR AUTHORIZED ACCESS", filed on December 23, 2015 with the State Intellectual Property Office of People's Republic of China.

**TECHNICAL FIELD**

The present disclosure relates to the field of information security and access control technology, and in particular to a client device, a server device, and an access control system for achieving secure authorized access by using a decentralized public database, and a method thereof.

**BACKGROUND**

Access control is a mechanism related to all of computer systems regardless of the types of the computer systems, such as a client/server system, a client/browser system, or a cloud system. The access control includes the simplest username/password, a widely-used authentication code/validation code (CAPTCHA), as well as the currently widely-used SMS verification code and hardware-based UKey, and the like, wherein both the SMS verification code and the UKey require supports by an external device. The most important part of the access control process is to confirm the authenticity and validity of an access application. With the determination of authenticity and validity, some network attacks, such as replay attacks and man-in-the-middle attacks, can be effectively resisted, thereby reducing the risk of denial-of-service attacks.
Prior art includes D Hardt, "RFC 6749 The OAuth 2.0 Authorization Framework", (20121031), pages 1 - 76, URL: https://www.rfc-editor.org/rfc/pdfrfc/rfc6749.txt.pdf and Anonymous, "Blockchain - Wikipedia", (20151216), URL: https://en.wikipedia.org/w/index.php?title=Blockchain&oldid=695470105.

**SUMMARY**

A brief overview of the present disclosure is given below so as to provide a basic understanding of certain aspects of the present disclosure. However, it is to be understood that this summary is not an exhaustive overview of the present disclosure. It is neither intended to determine the critical part or the important part of the present disclosure, nor intended to limit the scope of the present disclosure. The purpose thereof is merely to give some concepts of the present disclosure in a simplified form as a prelude to the more detailed description made later.
In view of the above problems, an object of the present disclosure is to provide a client device, a server device, and an access control system for authorized access that can effectively resist some network attacks, and a method thereof.
According to an aspect of the present disclosure, a client device for authorized access is provided, which includes: a request generating unit, a recording unit and an accessing unit. The request generating unit is configured to generate a request for authorized access to protected resources and send the request to a server device. The recording unit is configured to record the request in a public database which is a decentralized, distributed database and in which records cannot be modified. The accessing unit is configured to perform corresponding operations for accessing the protected resources utilizing response information sent by the server device in response to the request.
According to a preferred embodiment of the present disclosure, the public database includes blockchain.
According to another preferred embodiment of the present disclosure, the request generating unit is further configured to sign the request utilizing a client private key and send the signed request to the server device, and the recording unit is further configured to record the signed request in the public database.
According to another preferred embodiment of the present disclosure, the request generating unit is further configured to send location information of the request in the public database to the server device.
According to another preferred embodiment of the present disclosure, the accessing unit is further configured to verify a record of the response information in the public database utilizing a server public key, and to perform the corresponding operations according to a result of the verifying.
According to another preferred embodiment of the present disclosure, the server device includes an authorization server and a resource server.
According to another preferred embodiment of the present disclosure, the request includes a request for an authorization access credential sent to the authorization server, and the response information includes the authorization access credential from the authorization server.
According to another preferred embodiment of the present disclosure, the authorization access credential includes limitation information related to the protected resources.
According to another preferred embodiment of the present disclosure, the limitation information includes an identifier of a manager for the protected resources, resources which are allowed to be accessed by the client device and a valid period of the authorization access credential.

According to another preferred embodiment of the present disclosure, the limitation information further includes setting of accessing times within the valid period, and the accessing unit performs the corresponding operations for accessing the protected resources according to the setting of accessing times.

According to another preferred embodiment of the present disclosure, the request includes a data accessing request sent to the resource sever, and the response information includes data resources from the resource server.

According to another preferred embodiment of the present disclosure, the authorization server and the resource sever are the same server.

According to another aspect of the present disclosure, a server device for authorized access is further provided, which includes: a response generating unit and a recording unit. The response generating unit is configured to generate corresponding response information in response to a request for authorized access to protected resources from a client device and send the response information to the client device. The recording unit is configured to record the response information in a public database which is a decentralized distributed database and in which records cannot be modified.

According to another aspect of the present disclosure, an access control system for authorized access is further provided, which includes a client device, a server device and a public database. The public database is a decentralized, distributed database and records in the public database cannot be modified. The client device includes a request generating unit, a first recording unit and an access unit. The request generating unit is configured to generate a request for authorized access to protected resources and send the request to the server device. The first recording unit is configured to record the request in the public database. The accessing unit is configured to perform corresponding operations for accessing the protected resources utilizing response information sent by the server device in response to the request. The server device includes a response generating unit and a second recording unit. The response generating unit is configured to generate corresponding response information in response to the request and send the response information to the client device. The second recording unit is configured to record the response information in the public database.

According to another aspect of the present disclosure, a method for authorized access performed at a client device is further provided, which includes: generating a request for authorized access to protected resources and sending the request to a server device; recording the request in a public database which is a decentralized distributed database and in which records cannot be modified; and performing corresponding operations for accessing the protected resources utilizing response information sent by the server device in response to the request.

According to another aspect of the present disclosure, a method for authorized access performed at a server device is further provided, which includes: generating corresponding response information in response to a request for authorized access to protected resources from a client device and sending the response information to the client device; and recording the response information in a public database which is a decentralized distributed database and in which records cannot be modified.

According to another aspect of the present disclosure, an electronic device is further provided, which may include a transceiver and one or more processors. The one or more processors may be configured to perform the above-described method for authorized access according to the present disclosure.

According to other aspects of the present disclosure, there are also provided a computer program code and a computer program product for implementing the above-described method according to the present disclosure, and a computer readable storage media on which the computer program code for implementing the above-described method according to the present disclosure is recorded.

According to embodiments of the present disclosure, the secure authorized access to protected resources may be achieved effectively utilizing a decentralized public database.

Other aspects of the embodiments of the present disclosure are given in the following description, in which the detailed description is used for fully disclosing, without limiting, preferred embodiments of the disclosed disclosure.

**BRIEF DESCRIPTION OF THE DRAWINGS**

The present disclosure may be better understood with reference to the detailed description given below in conjunction with the drawings, in which the same or like reference numerals are used throughout the drawings to refer to the same or like parts. The drawings, together with the following detailed description, are included in this specification and form a part of this specification, and are used to further exemplify preferred embodiments of the present disclosure and to explain the principles and advantages of the present disclosure. In the drawings:

Figure 1 is a schematic diagram illustrating an example of an architecture of an access control system according to an embodiment of the present disclosure;

Figure 2 is a block diagram illustrating a functional configuration example of a client device according to an embodiment of the present disclosure;

Figure 3 is a block diagram illustrating a functional configuration example of a server device according to an embodiment of the present disclosure;

Figure 4 is a schematic diagram illustrating an example of an interaction flow for authorized access according to an embodiment of the present disclosure;

Figure 5 is a schematic diagram illustrating an example of a blockchain-based access control implementation according to an embodiment of the present disclosure;

Figure 6 is a schematic diagram illustrating an example of a format and content of a record item in blockchain according to an embodiment of the present disclosure;

Figure 7 is a flowchart illustrating a process example of a method for authorized access according to an embodiment of the present disclosure;

Figure 8 is a schematic diagram illustrating an example of an architecture of an access control system based on blockchain and an OAuth protocol according to an embodiment of the present disclosure;

Figure 9 is a schematic diagram illustrating an example of a blockchain-based OAuth protocol implementation according to an embodiment of the present disclosure;

Figure 10 is a flowchart illustrating an example of an interaction process for implementing a limited times of authorized accesses to which the technique according to the present disclosure is applied;

Figures 11A and 11B are schematic diagrams illustrating an example for implementing a limited times of authorized accesses to which the technique according to the present disclosure is applied;

Figure 12 is a flowchart illustrating a process example of a method for authorized access performed at a client device according to an embodiment of the present disclosure;

Figure 13 is a flowchart illustrating a process example of a method for authorized access performed at a server device according to an embodiment of the present disclosure;

Figure 14 is a schematic diagram illustrating a first application example of the technique according to the present disclosure;

Figure 15 is a schematic diagram illustrating a second application example of the technique according to the present disclosure; and

Figure 16 is a block diagram illustrating an example structure of a personal computer as an information processing device that can be adopted in an embodiment of the present disclosure.

## DETAILED DESCRIPTION OF THE EMBODIMENTS

Hereinafter, the demonstrative embodiments of the disclosure will be described in conjunction with the drawings. For clarity and brief, not all the features of the practical embodiments are described in the specification. However, it is to be understood that, many decisions specific to the embodiment must be made during the development of any one of the practical embodiments, so as to achieve the specific object of the developer, for example, coinciding with limiting conditions related to the system and service, and possibly changing the limiting conditions with different embodiments. Moreover, it is to be understood that, although the developing work may be very complicated and time-consuming, but is only a routine task for those skilled in the art benefit from the disclosure.

It is further to be noted here that, to avoid obscuring the present disclosure due to unnecessary details, only the device structure and/or processing step closely related to the solution of the present disclosure are shown in the drawings, and other details less related to the present disclosure are omitted.

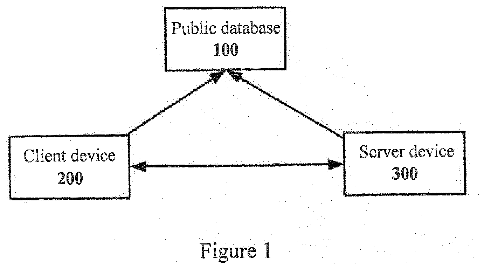

Next, embodiments of the present disclosure will be described in detail with reference to Figures 1 to 16.

Figure 1 is a schematic diagram illustrating an example of an architecture of an access control system according to an embodiment of the present disclosure

As shown in Figure 1, the access control system according to the embodiment may include a public database 100, a client device 200 and a server device 300.

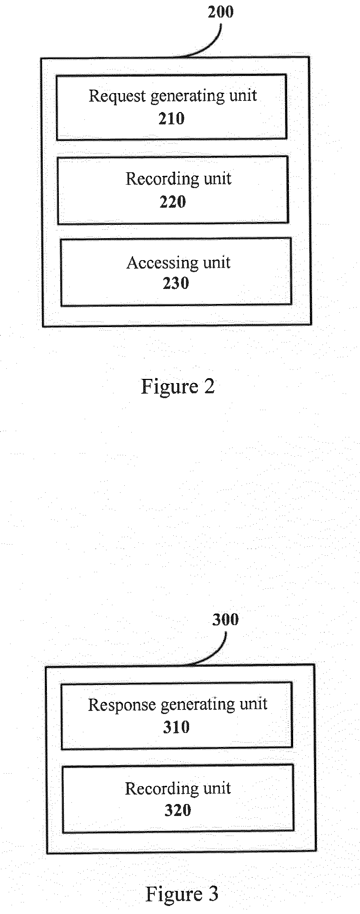

In the embodiment according to the present disclosure, in order to ensure secure access by the client device 200 to protected resources, key operations of the client device 200 and the server device 300 during the authorized access process may be respectively recorded in the public database 100. Since the public database 100 is a decentralized, distributed database and the data in the public database cannot be modified or deleted once being recorded, it helps to defend against network attacks and achieve secure access control. In the following, functional configuration examples of the client device 200 and the server device 300 will be described in detail with reference to Figures 2 and 3 respectively.

Figure 2 is a block diagram illustrating a functional configuration example of a client device according to an embodiment of the present disclosure.

As shown in Figure 2, the client device 200 according to the embodiment may include a request generating unit 210, a recording unit 220 and an accessing unit 230.

The request generating unit 210 may be configured to generate a request for authorized access to protected resources and send the request to the server device 300.

The recording unit 220 may be configured to record the above-described request in the public database 100.

The accessing unit 230 may be configured to perform corresponding operations for accessing the protected resources utilizing response information sent by the server device 300 in response to the request.

Preferably, in order to enhance the security, the request generating unit 210 may further sign the request utilizing a private key in the identity key pair (including a private key (denoted as SK) and a public key (denoted as PK)) generated by a key generation center for the client device 200, and send the signed request to the server device 300. The recording unit 220 may record the signed request in the public database 100. For example, this process may be expressed by the following expression (1):

$$Record\ 1 = Sign_{SK\ of\ Client}(\ Hash\ (\ Request\ )) \qquad (1)$$

where Request represents a request from the client device, SK of Client represents a private key of the client device 200, Hash() represents the Hash function, $Sign_{SK\ of\ Client}$ represents signing utilizing the private key of the client device 200, and Record1 represents a record of the signed request in the public database.

Preferably, the request generating unit 210 may further send location information (herein denoted as Addr1, for example) of the above-described request recorded in the public database to the server device 300. In this way, the server device 300 can search the public database 100 for a record (Record1 described above) of the signed request in the public database 100 based on the received location information, and verify the authenticity of the request from the client device 200 utilizing the public key of the client device 200. For example, this verification process may be expressed by the following expression (2):

$$Addr\ 1 \rightarrow Record\ 1$$

$$Verify(Rec\ ord\ 1) = Verify_{PK\ of\ Client}(\ Record\ 1\ ) = ?\ Hash\ (\ Request\ ) \qquad (2)$$

where Verify() represents the adopted verification function, and PK of Client represents a public key of the client device 200.

Then, for the request that is verified as reasonable, the server device 300 may generate corresponding response information (herein denoted as Response) to send to the client device 200, and may further record the response information in the public database 100. Preferably, in order to further ensure security, the server device 300 may also sign the response information utilizing the server private key, send the signed response information to the client device 200, and record the signed response information in the public database 100. For example, this process may be expressed by the following expression (3):

$$Record\ 2 = Sign_{SK\ of\ Server}(\ Hash\ (\ Response\ )) \qquad (3)$$

where Response represents the response information generated by the server device, SK of Server represents a private key of the server device 300, Hash() represents the Hash function, Sign$_{SK \text{ of Server}}$ represents signing utilizing the private key of the server device 300, and Record2 represents a record of the signed response information in the public database 100.

Further, similar to the above-described configuration, the server device 300 may also send location information (here denoted as Addr2, for example) of the signed response information in the public database to the client device 200, so that the accessing unit 230 of the client device 200 can search the public database 100 for a record of the signed response information in the public database 100 based on the received location information, verify the record by utilizing the server public key, and perform corresponding operations according to a result of the verifying. For example, this process may be expressed by the following expression (4):

$$\text{Addr 2} \rightarrow \text{Record 2}$$

$$\text{Verify(Rec ord2)} = \text{Verify}_{PK \text{ of Server}}(\text{ Record 2 }) = ? \text{ Hash ( Response )} \qquad (4)$$

where Verify() represents the adopted verification function, and PK of Server represents a public key of the server device 300.

The functional configuration example of the client device for authorized access has been described above with reference to Figure 2. Correspondingly, a functional configuration example of the server device for authorized access will be described below with reference to Figure 3. Figure 3 is a block diagram illustrating a functional configuration example of a server device according to an embodiment of the present disclosure.

As shown in Figure 3, the server device 300 according to this embodiment may include a response generating unit 310 and a recoding unit 320.

The response generating unit 310 may be configured to generate corresponding response information in response to a request for authorized access to protected resources from a client device and send the response information to the client device 200.

Preferably, as described above, the response generating unit 310 may verify a record of the request from the client device 200 in the public database (i.e., the above-described record Record1) by utilizing a client public key (i.e., the above-described PK of Client), and generate response information (i.e., Response) according to a result of the verifying. This process may be expressed by the above-described expression (2), for example.

The recording unit 320 may be configured to record the response information in the public database 100.

Preferably, as described above, the response generating unit 310 may further be configured to sign the response information utilizing the server private key and send the signed response information to the client device 200. The recording unit 320 may further be configured to record the signed response information in the public database 100. The process may be expressed by the above-described expression (3), for example. Further, the response generating unit 310 may further send location information (i.e., the above-described Addr2) of the response information in the public database to the client device 200.

It should be understood that, the functional configuration example of the server device 300 corresponds to the functional configuration example of the above-described client device 200. Hence, for the contents not described in detail here, one may refer to the description of the corresponding portions above, which will not be repeated here.

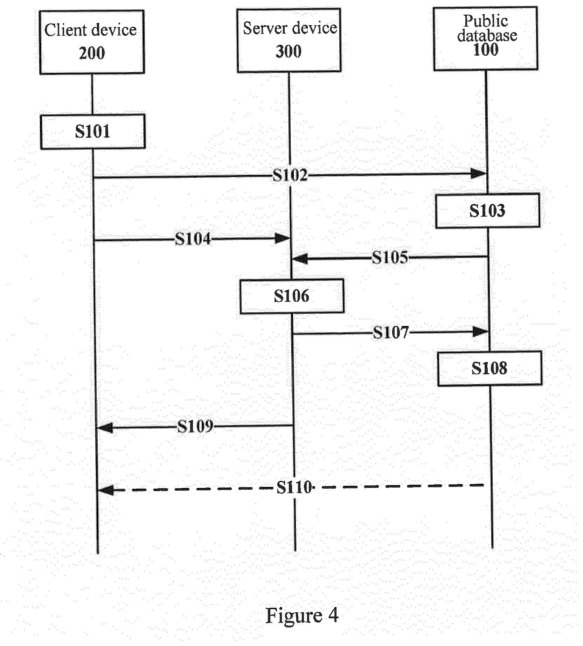

In order to facilitate understanding the implementation of the above-described authorized access, an interaction process between the client device 200, the server device 300, and the public database 100 for authorized access will be described below with reference to Figure 4. Figure 4 is a schematic diagram illustrating an example of an interaction flow for authorized access according to an embodiment of the present disclosure.

As shown in Figure 4, first, in step S101, the client device 200 signs the request by utilizing the client private key to generate a request for authorized access to the protected resources, and records the request in the public database 100 in step S102. In step S103, the public database 100 adds the above-described request as a record (i.e., Record1) in the public database 100 at a location of Addr1, for example. Then, in step S104, the client device 200 sends the signed request and the location information Addr1 of the signed request in the public database 100 to the server device 300. Next, in step S105, the server device 300 verifies the record Record1 of the above-described request by utilizing the client public key based on the location information Addr1. If the verification indicates the request as reasonable, the server device 300 generates corresponding response information and signs the response information utilizing the server private key in step S106. Then, in step S107, the server device 300 records the signed response information in the public database 100. In step S108, the public database 100 adds the response information as a record (i.e., Record2) in the public database 100 at a location of Addr2, for example. Next, in step S109, the server device 300 sends the signed response information and the location information Addr2 of the signed response information in the public database to the client device 200. If necessary, the client device 200 may verify the record Record2 of the response information in the public database 100 by utilizing the server public key based on the location information Addr2 in step S110 (which is an optional step, as shown by a dotted line), and perform corresponding operations according to a result of the verifying, such as accessing the protected resources.

It should be understood that the above-described interaction process is only an example rather than a limitation, and the order of execution of the various steps as shown is merely for convenience of description rather than for limitation. According to requirements, some steps may be performed in parallel or in a varied order.

As can be seen from the above-described process, the interaction process between the client device 200 and the server device 300 is recorded in the public database 100 which is a decentralized, distributed database and records in which cannot be modified (that is, the records cannot be deleted and/or altered), and therefore network attacks can be effectively resisted by signing the interaction process utilizing the client private key and the server private key respectively and recording the same in the public database. Here, it should be noted that, since the public database 100 is a distributed database shared by all network entities, theoretically if more than half or more than two thirds of the network entities agree to modify the data records in the public database, the records in the public database can be allowed to be modified. However, in practice, it is difficult to make more than half or more than two thirds of network entities agree to modify the data records. Therefore, it is generally considered that the data in the public database cannot be altered or deleted once it is recorded.

Preferably, as an example, the above public database may include blockchain. Blockchain is regarded as the main technological innovation supporting Bitcoin. Since blockchain is used to prove all transactions in the network as a certification mechanism that requires no trust, blockchain is a "non-trust-based" architecture. The "non-trust-based" architecture means that multiple participants in the entire system can complete various types of transactions and collaboration without trusting each other. This has always been the weakest part of the traditional Internet so far. In contrast to a case where users are required to establish and maintain trust with counterparties (others) or third-party agencies (such as banks), users can trust a public accounting system maintained by the "miner-accountants" and stored in a number of different decentralized nodes around the world. Blockchain is a key innovation as the architecture of a new decentralized, non-trust-based trading system. The blockchain allows performing all decentralized transactions of any type without intervention between any entities in the world. The blockchain functions like another application layer running on the existing stack of the Internet Protocol, which adds a completely new layer to the Internet to carry out economic transactions, including an instant digital currency payment (in the case of a wide use of cryptocurrencies around the world) and a longer-term, more complex economic contract. Any currency, economic contract, hard assets or soft assets can be traded by a blockchain system. Further, the blockchain can not only be used for transactions but also be used as a registration and inventory system for recording, tracking, monitoring, and trading all assets. The blockchain literally appears to be a huge expansion table for registering all assets and a billing system for trading these assets around the world, the assets including all forms of assets held by all entities worldwide. Hence, the blockchain can be used for registration, stock, and exchange of any forms of asset, including all fields of finance, economy, and money, and hard assets (physical assets) and intangible assets (votes, ideas, reputation, intention, health data, etc). The Bitcoin peer-to-peer network stores all transaction histories in the "Blockchain". The blockchain extends continuously, and new blocks will not be removed once being added to the blockchain. The blockchain is actually a P2P network platform, which is a group of distributed client nodes, a distributed database formed by all participants, and records of all Bitcoins transaction histories. Furthermore, as the blockchain technology progresses, it is not just applied to the field of virtual currency payment. The decentralized, non-trust-based point-to-point model of blockchain technology means that there is no middleman for transaction at the most basic level. The Blockchain is a network foundation of Bitcoin, but the blockchain per se means more. The blockchain technology 1.0 may be born for virtual currency, while the core feature of credit trust of the blockchain technology 2.0 has become the currently important application direction, which is proposed to be used for a blockchain contract, notarization, and the like. The blockchain technology 3.0 is supposed to be applied to other fields than the financial field, such as the fields of government, health, science, culture, art and the like.

The Blockchain is a decentralized, distributed, and chronological public record, or is referred to as a public ledger system. The blockchain is shared and maintained by all users. Records in the blockchain can be used to verify double consumption. If the blockchain is applied to bills for virtual currencies, it can be used to verify the permanence of Bitcoin transactions and prevent double consumption. The blockchain in the present disclosure can be used to avoid multiple uses of the same authentication code. When the blockchain technology is applied to the authorization service platform, with a set of chronological public records, the steps related to the authorization protocol can be verified and replay attacks can be prevented.

In addition to Bitcoin, the public database according to embodiments of the present disclosure may also be a public ledger platform based on a decentralized blockchain, such as Litecoin, or a distributed ledger system which is decentralized using "consensus" instead of mining, like Hyperledger.

The authorization service of the present disclosure may also be implemented based on the Hyperledger platform. For example, the request and response information are recorded in a consensus pool of Hyperledger, such as a testpool, a custompool, or the like. The testpool is open to everyone for free, and the custompool is a pool that allows user customization. According to the "consensus" mechanism of Hyperledger, the record cannot be deleted or modified after being confirmed as valid.

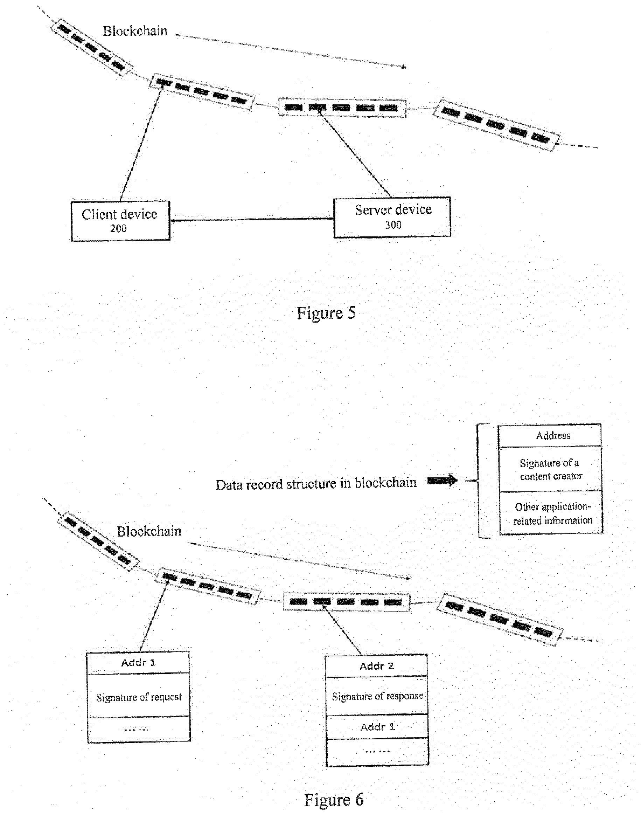

An access control implementation according to an embodiment of the present disclosure will be described below with an example of blockchain. However, it should be understood that, the present disclosure is certainly not limited thereto, and may be applied to any decentralized, distributed database system in which the records cannot be deleted or modified. Figure 5 is a schematic diagram illustrating an example of a blockchain-based access control implementation according to an embodiment of the present disclosure.

As shown in Figure 5, the client device 200 and the server device 300 add their respective signed requests and response information into the blockchain. These records are chronologically arranged in the blockchain, and cannot be modified or deleted once being recorded. Accordingly, the client device 200 and the server device 300 can search for the corresponding record according to the location information of the request and response information in the blockchain, and verify the records in the blockchain by ultilizing the public key to ensure security of access control.

Figure 6 is a schematic diagram illustrating an example of a format and content of record items in blockchain according to an embodiment of the present disclosure.

As shown in Figure 6, a record in the blockchain may include an address, a signature of a content creator, and other application-related information. For example, a record of a request recorded by the client device 200 in the blockchain includes the location information (Addr1) of the request in the blockchain and a signature of the request. After the server device 300 records its response information in the blockchain, the record items in the blockchain now include the location information (Addr2) of the response information in the blockchain, the signature of the response, the location information (Addr1) of the request in the blockchain, the signature of the request, and the like. That is, records in the blockchain increase in time sequence of recording and cannot be deleted or modified.

It should be understood that, the format and content of the record items given herein are only examples, and the format and content of the record items may be set according to actual application requirements, which are not limited in the disclosure.

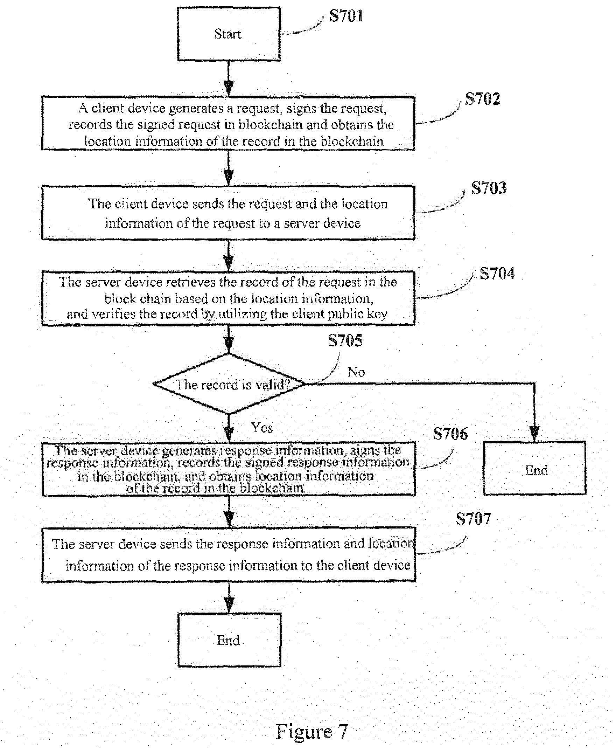

Corresponding to the interaction process described above, a process example of a method for authorized access according to an embodiment of the present disclosure will be described below with reference to Figure 7. Figure 7 is a flowchart illustrating a process example of a method for authorized access according to an embodiment of the present disclosure.

As shown in Figure 7, the method starts at step S701 and then proceeds to step S702. In step S702, the client device 200 generates a request for authorized access to protected resources, signs the request utilizing the client private key and then records the signed request in blockchain, and obtains the location information of the request in the blockchain. Then, the method proceeds to step S703. In step S703, the client device 200 sends the signed request and the location information of the request in the blockchain to the server device 300. Next, in step S704, the server device 300 retrieves the record of the request in the block chain based on the received location information, and verifies the record by utilizing the client public key. Then, the method proceeds to step S705, in which it is determined whether the record is valid or not. If it is determined that the record is invalid, the method ends. If it is determined that the record is valid, the method proceeds to step S706. In step S706, the server device 300 generates response information for a valid request, signs the response information by utilizing the server private key and then records the signed response information in the blockchain, and obtains location information of the response information in the blockchain. Next, in step S707, the server device 300 sends the signed response information and location information of the signed response information in the blockchain to the client device 200, and the method ends.

The process example of the method for authorized access according to the present disclosure has been described above with reference to Figure 7. However, it should be understood that, this is merely an example rather than a limitation, and those skilled in the art may modify the above process as needed. For example, as described above, if necessary, in the next step, the client device 200 may further retrieve the record of the response information in the blockchain according to the received location information, verify the record by utilizing the server public key, and perform corresponding operations according to a result of the verifying.

The general example of authorization access control has been described above with reference to Figure 1 to Figure 7. The implementation of the authorization access control to which the technique according to the present disclosure is applied will be described in the following in conjunction with the OAuth (Open Authority, http://oauth.net/) standard.

Before a combination of the OAuth protocol and the technique according to the present disclosure is specifically described, the OAuth protocol is briefly introduced here. The OAuth protocol is an open network protocol (standard) about authorization. In the OAuth protocol, an authorization layer is introduced, and the role of the client is separated from the role of the resource owner. The client requests for access to resources that are controlled by the resource owner and owned by the resource server, and is issued with a set of credentials different from a credential of the resource owner. In the OAuth protocol, the following four roles are defined: a resource owner, a resource server, a client and an authorization server. The resource owner is an entity capable of authorizing access to protected resources. When the resource owner is a person, it may also be referred to as a terminal user. The resource server is a server owning the protected resources, and is capable of accepting and responding to a request for access to the protected resources using an access token. The client is an application that represents the resource owner and requests for the protected resources utilizing the authorization of the resource owner, which does not imply any specific implementation characteristics (for example, whether the application is executed on a server, desktop, or other device). The authorization server is a server that issues the access token to the client after successfully authenticating the resource owner and obtaining authorization. The authorization server may be the same server as the resource server or may be a different entity. Moreover, a single authorization server may issue access tokens accepted by multiple resource servers.

The development of OAuth has promoted the development of new applications in the open API field. OAuth provides applications with a method for accessing protected resources. Before accessing the protected resources, an application must first obtain an authorization (access permission) from the resource owner, and then exchange the access permission for an access token (which represents the scope, duration, and other attributes of the access permission). The application accesses the protected resources by presenting the access token to the resource server. The OAuth 2.0 standard is currently recommended for use. However, the protocol of OAuth 2.0 itself does not provide security and integrity protection mechanisms. Developers need to provide additional protection mechanisms for communication security when using OAuth 2.0.

The OAuth 2.0 protocol itself cannot defend against replay attacks and man-in-the-middle attacks. For example, in a case of replay attacks during network transmission, an authentication code may be intercepted and used to apply for an authorization access credential multiple times. As described above, man-in-the-middle attacks and replay attacks can be effectively resisted by recording the interaction process of authorization in a public database (for example, blockchain), that is, by combining the OAuth protocol with the blockchain technology. As an example, an example of an implementation of authorization access control that is based on blockchain and the OAuth protocol will be described in detail below.

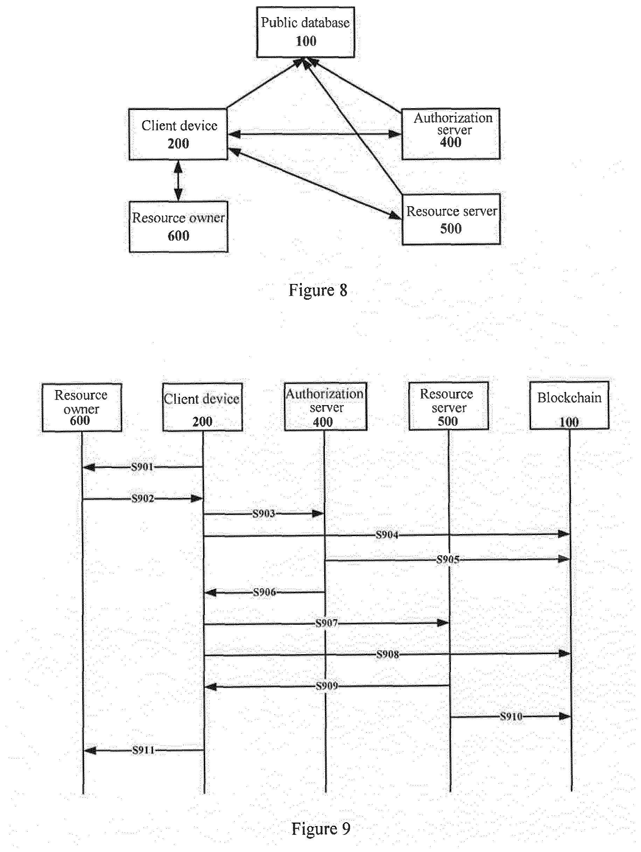

Figure 8 is a schematic diagram illustrating an example of an architecture of an access control system based on blockchain and the OAuth protocol according to an embodiment of the present disclosure

As shown in Figure 8, an access control system according to this embodiment may include blockchain 100, a client device 200, an authorization server 400, a resource server 500, and a resource owner 600. The blockchain 100 and the client device 200 have the same configurations as the public database 100 and the client device 200 described above, which will not be repeatedly described here. The authorization server 400 and the resource server 500 may have the same configuration as the server device 300 described above. That is, the server device 300 may include the authorization server 400 and the resource server 500, and the two servers may also be the same server device. Therefore, its configuration is not repeatedly described here. Only functions of the above devices in the OAuth protocol are briefly described in the following.

The resource owner 600 is an entity that can authorize and permit access to protected resources. The resource server 500 is a server that owns protected resources, and is capable of accepting and responding to requests for the protected resources using access tokens. The client device 200 is an application that represents a resource owner and requests for the protected resources by using authorization of the resource owner, and it is not limited to any particular implementation form. That is, it can be implemented on a server, computer, portable device, or other device. The authorization server 400 is a server that issues an access token to the client device 200 after successfully authenticating the resource owner and obtaining authorization.

An example of an implementation process of the blockchain-based OAuth protocol will be described in detail below with reference to Figure 9. Figure 9 is a schematic diagram illustrating an example of an implementation of blockchain-based OAuth protocol according to an embodiment of the present disclosure.

As shown in Figure 9, first, in step S901, the client device 200 initiates an authorization request to the resource owner 600. Then, in step S902, the resource owner 600 sends a user authorization credential to the client device 200. Next, in step S903, the client device 200 sends a request for an authorization access credential (that is, applying for data access authorization) to the authorization server 400 according to the user authorization credential. In step S904, the client device 200 records the request in the blockchain 100. It should be noted that the request for the authorization access credential includes the signature information of the client device 200, that is, the client device 200 signs the request utilizing the client private key. Then, in step S905, the authorization server 400 verifies the user authorization credential. If the user authorization credential is verified as valid, an authorization access credential is generated, and it is recorded in the blockchain 100. It should be noted that, the authorization access credential here includes the signature information of the authorization server 400, that is, the authorization server 400 signs the authorization access credential utilizing its server private key. Next, in step S906, the authorization server 400 returns the authorization access credential to the client device 200. Then in step S907, the client device 200 sends a data access request (that is, applying for data access) to the resource server 500 by utilizing the authorization access credential, and records the data access request in the blockchain 100 in step S908. It should be noted that, the data access request also includes the signature information of the client device 200, that is, the client device 200 signs the data access request utilizing the client private key. Next, in step S909, the resource server 500 determines the validity of the data access request by checking the information in the blockchain (including the information recorded in the blockchain 100 in steps S904, S905, and S908 described above). If the data access request is determined as valid, the corresponding data resources are provided to the client device 200. Also, in step S910, the resource server 500 records its own response operation in the blockchain 100, and the record also includes the signature information of the resource server 500 (using the private key of the resource server). Finally, in step S911, the client device 200 can provide the corresponding data resource to the resource owner 600 for use.

It should be understood that the above-described interaction process is only an example rather than a limitation, and the order of execution of the various steps shown is also merely for convenience of description rather than for limiting. According to requirements, some steps may be performed in parallel or in a varied order.

As can be seen from the interaction process of implementation of the above blockchain-based OAuth protocol, in this case, the server device may include an authorization server and a resource server. The request from the client device may include a request for an authorization access credential to the authorization server and a data access request to the resource server. The response information from the server device may include an authorization access credential from the authorization server and data resources from the resource server. In addition, it should be noted that, although the authorization server and the resource server are shown as separate server devices here, they can actually be the same server.

Preferably, the above-described authorization access credential may include limitation information related to the protected resources. For example, the limitation information may include an identifier of a manager for the protected resources, resources which are allowed to be accessed by the client device and a valid period of the authorization access credential, and the like.

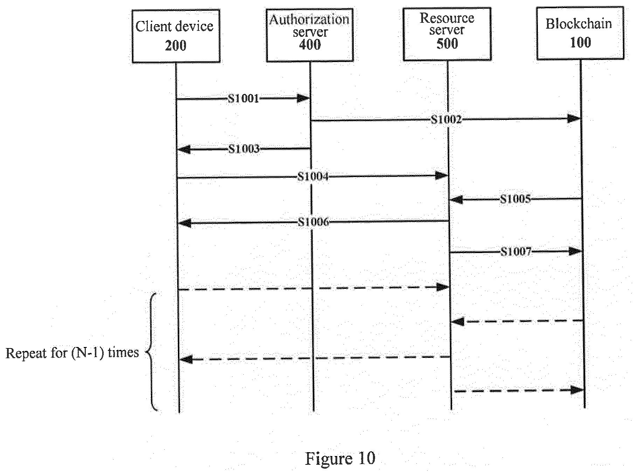

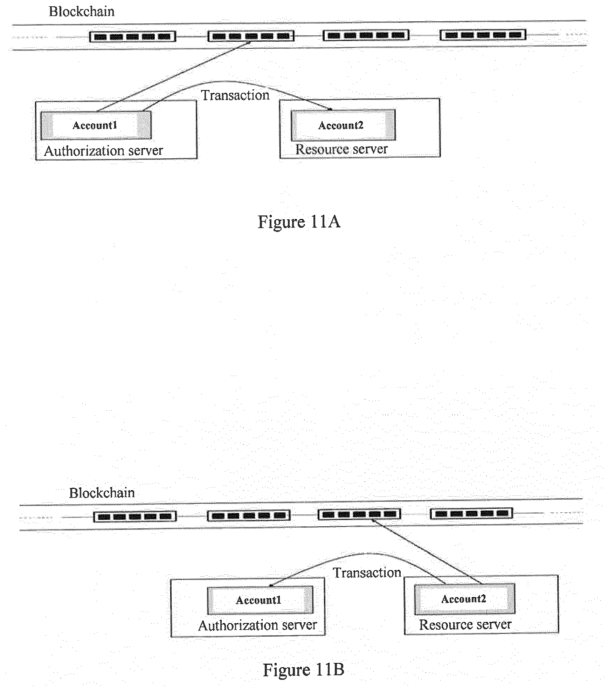

Further, preferably, the limitation information may further include setting of accessing times within the valid period of the authorization access credential. The accessing unit 230 of the client device 200 may perform the corresponding operations for accessing the protected resources according to the setting of accessing times. The response generating unit 310 of the server device 300 may successively decrease the setting of accessing times according to the access to the protected resources by the client device 200, and the recording unit 320 may record the decreased accessing times in the public database. In this way, replay attacks can be prevented, effectively achieving a limited times of authorized accesses to the protected resources. Hereinafter, a process for achieving the limited times of authorized accesses to which the technique according to the present disclosure is applied will be described in detail with reference to Figure 10, Figure 11A, and Figure 11B. Figure 10 is a flowchart illustrating an example of an interaction process for implementing a limited times of authorized accesses to which the technique according to the present disclosure is applied. Figure 11A and Figure 11B are schematic diagrams illustrating an example for implementing a limited times of authorized accesses to which the technique according to the present disclosure is applied.

As shown in Figure 10, first, in step S1001, the client device 200 requests the authorization server 400 for N times of authorized accesses (where N is a positive integer greater than or equal to 1). Then, in step S1002, the authorization server 400 may generate two Bitcoin accounts (or may use existing accounts) Account1 and Account2 for these N-times authorized accesses. The two accounts correspond to two key pairs respectively. The account Account1 is managed by the authorization server 400, and the account Account2 is managed by the resource server 500. Then the authorization server 400 transfers N coins of virtual currency from the account Account1 to the account Account2 (as shown in Figure 11A). The N coins of virtual currency correspond to N times of authorized accesses. At the same time, the authorization server 400 records this transfer operation in the blockchain 100.

Next, in step S1003, the authorization server 400 sends the credentials of the N times of authorized accesses together with the records in the blockchain 100 to the client device 200. Then, in step S1004, the client device 200 may access the resource server 500 by utilizing the authorization access credential, and provide the resource server 500 with the records in the blockchain. In step S1005, the resource server 500 may verify the record in the blockchain to determine whether the authorization access credential is valid. In step S1006, if it is determined that the authorization access credential is valid, the resource server 500 provides the client device 200 with the corresponding data service; and if it is determined that the authorization access credential is invalid, the resource server 500 refuse to provide the corresponding service. Next, in step S1007, for each access, the resource server 500 may transfer 1 coin of virtual currency from the account Account2 to the account Account1 (as shown in Figure 11B) and also record the transfer operation in the blockchain 100. The transfer information may also be provided to the client device 200 at the same time to facilitate the client device 200 to check. The above operation is repeated until N times of authorized accesses are completed, that is, N transfer operations from account Account2 to account Account1 are completed, and the entire authorized access process ends.

As can be seen in the above process, since the operations of the client device 200, the authorization server 400 and the resource server 500, and the limitation on the times of accesses are recorded in the blockchain 100, each device can verify various information by checking the corresponding record information in the blockchain 100. In this way, replay attacks and man-in-the-middle attacks can be effectively resisted, the security of the authorized access process can be improved, and a limited times of secure authorized accesses can be effectively achieved.

It should be understood that the process of implementing a limited times of authorized accesses based on the blockchain has been described above with reference to Figure 10 to Figure 11B, but this is only an example rather than a limitation, and those skilled in the art may modify the above process according to the principles of the present disclosure. For example, although it has been described above that two accounts are established to record each authorized access using the virtual currency, this may not be necessary as long as each authorized access of the client device is recorded in the public database for the devices in the system to check and verify.

In addition, it should also be noted that, although the implementation of the OAuth protocol to which the technique according to the present disclosure is applied has been described above with the blockchain as an example, it is apparent that other public databases (such as the consensus pool of Hyperledger mentioned above) besides the blockchain can be used to ensure communication security of the OAuth protocol.

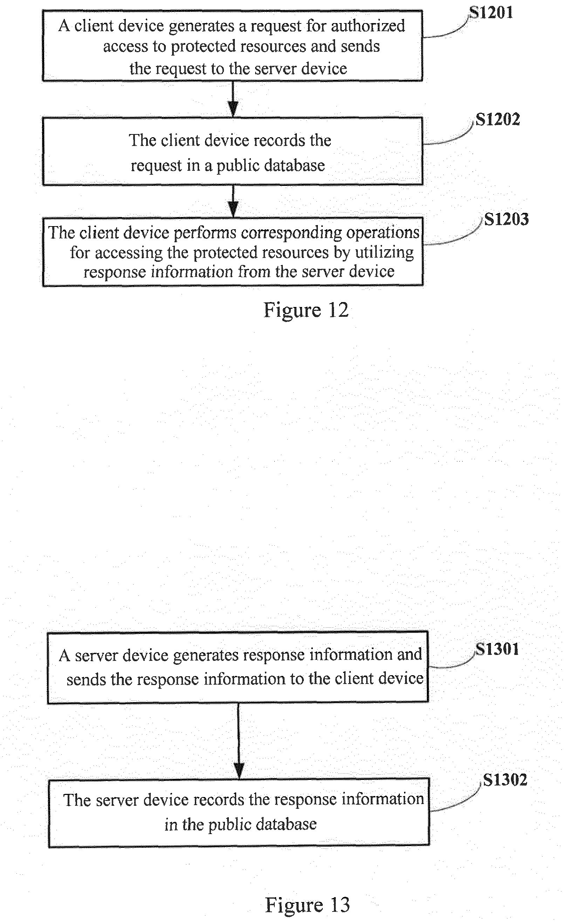

Corresponding to the above-described device embodiments, examples of processes of methods for authorized access performed at a client device side and at a server device side according to embodiments of the present disclosure will be described below with reference to Figures 12 and 13 respectively. Figure 12 is a flowchart illustrating a process example of a method for authorized access performed at a client device according to an embodiment of the present disclosure.

As shown in Figure 12, the method according to this embodiment starts at step S1201, in which the client device generates a request for authorized access to protected resources and sends the request to the server device, and then the method proceeds to step S1202. Preferably, in step S1201, the client device may also sign the request utilizing the client private key and send the signed request to the server device. In step S1202, the client device records the generated request in a public database which is a decentralized, distributed database and in which records cannot be modified. Preferably, the public database includes blockchain. Then, the method proceeds to step S1203. In step S1203, the client device performs corresponding operations for accessing the protected resources utilizing response information sent by the server device in response to the request.

Preferably, the client device may further send location information of the request in the public database to the server device, and may verify a record of the response information of the server device in the public database utilizing a server public key, and perform the corresponding operations according to a result of the verifying.

Preferably, when applied in the implementation of the OAuth protocol, the above-described server device may include an authorization server and a resource server, and the two servers may be the same server. The request may include a request for an authorization access credential sent to the authorization server, and a data accessing request sent to the resource sever. The response information includes the authorization access credential from the authorization server and data resources from the resource server. Preferably, the authorization access credential may include limitation information related to the protected resources. The limitation information may include an identifier of a manager for the protected resources, resources which are allowed to be accessed by the client device and a valid period of the authorization access credential. Further, preferably, the limitation information may further include setting of accessing times within the valid period, and the client device may perform the corresponding operations for accessing the protected resources according to the setting of accessing times.

The method performed at the client device described here corresponds to the above-described device embodiment. Therefore, for the content not described in detail here, reference may be made to the corresponding description in the device embodiment, which is not repeated here.

Figure 13 is a flowchart illustrating a process example of a method for authorized access performed at a server device according to an embodiment of the present disclosure.

As shown in Figure 13, the method according to this embodiment starts at step S1301. In step S1301, the server device generates corresponding response information in response to a request for authorized access to protected resources from a client device and sends the response information to the client device. Preferably, the server device may sign the response information by utilizing a server private key and send the signed response information to the client device. Then the method proceeds to step S1302, in which the server device records the response information in the public database.

Preferably, the server device may further send location information of the response information in the public database to the client device, and may verify a record of the request of the client device in the public database utilizing a client public key and generate the response information according to a result of the verifying.

The method performed at the server device described here corresponds to the above-described device embodiment. Therefore, for the content not described in detail here, reference may be made to the corresponding description in the device embodiment, which is not repeated here.

It should be noted that, although the process example of the method for authorized access according to the embodiments of the present disclosure has been described as above, it is only an example rather than limitation, and those skilled in the art can modify the above embodiments in accordance with principles of the present disclosure. For example, those skilled in the art can add, delete, or combine steps in each embodiment, and all such modifications fall within the scope of the present disclosure.

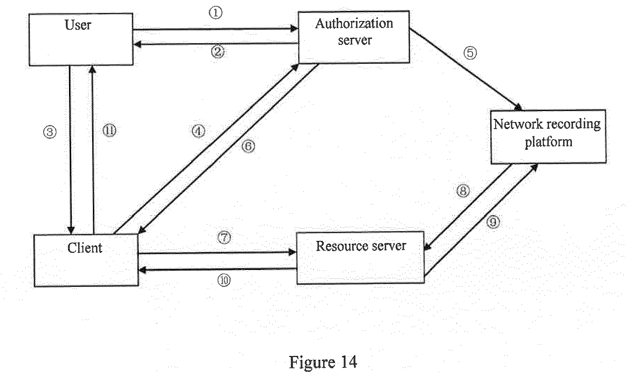

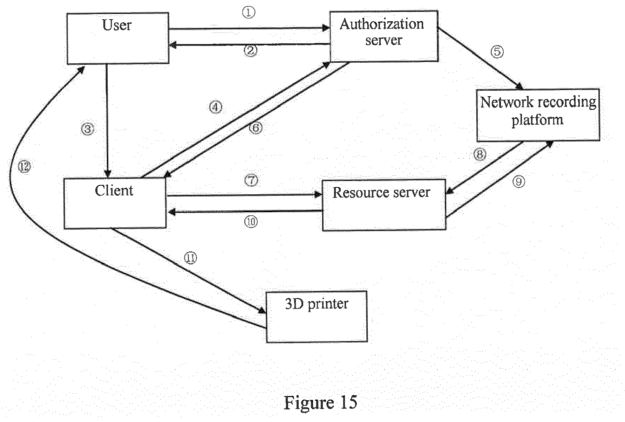

The technique according to the present disclosure can also be applied to other fields, such as fields of medical treatment, communication, electric power or the like. Application examples of the technique according to the present disclosure will be described below with reference to Figure 14 and Figure 15 respectively.

Figure 14 is a schematic diagram illustrating a first application example of the technique according to the present disclosure.

In the field of medical treatment, it is required to store data or records of a large number of users. It is desired to solve the problem of how to ensure that these data or records can be provided to users or a third-party platform authorized by the users via secure authorization access.

As shown in Figure 14, the system may include a user, a client, an authorization server, a resource server, and a network recording platform. The user is the subject of medical data, that is, the resource owner. The client is third-party application software (such as health management software). The authorization server is a medical institution or a service provider commissioned by the medical institution to provide services. The resource server is a medical institution or a service provider commissioned by the medical institution to provide services. The network recording platform corresponds to the above-described public database, which may be a distributed or P2P, decentralized network platform. Once key data for authorized access is recorded on the platform, it cannot be maliciously tampered with. Further, the recording platform generates a piece of address information for each record, and the address information may be a serial number or other coded information to facilitate retrieval. Further, although not shown in the figure, the system may further include a key management center for generating a key pair (a public key and a private key) for an entity for which data is recorded on the network recording platform. The key management center may be a third-party security platform, such as a Public Key Infrastructure (PKI)/Certificate Authority (CA) or the like, or may be an upper-layer security application system based on the network recording platform.

In the specific implementation, system initialization is performed first, so that the key management center allocates at least key pairs to the authorization server and the resource server, which are denoted as $(PK_{AS}, SK_{AS})$ and $(PK_{RS}, SK_{RS})$ respectively.

After initialization, the entities perform the process for secure authorized access to medical data according to the example implementation steps as shown in Figure 14.

1. The user applies for an authorization credential from the authorization server .

2. The authorization server issues the authorization credential to the user.

3. The user provides the client with authorization credential.

4. The client provides the authorization credential of the user to the authorization server and applies for a data access credential.

5. After verifying the authorization credential as valid, the authorization server generates a corresponding data access credential based on the information of the authorization credential. The data access credential includes at least information such as the target data to be accessed, the access period and the like . At the same time, the authorization server signs the data access credential by using its own private key $SK_{AS}$, and records the signed information in the network recording platform.

6. The authorization server returns the data access credential and address information of the data access credential in the network recording platform to the client.

7. The client uses the data access credential and the address information in the network recording platform to apply for data resources from the resource server.

8. The resource server retrieves the record corresponding to the data access credential based on the address information, and verifies the validity of the data access credential sent by the client by using the public key $PK_{AS}$ of the authorization server.

9. The resource server provides corresponding data resources to the client according to the data access credential, and records the operation in response to the data access credential in the network recording platform. That is, the data access credential is signed by using the private key $SK_{RS}$. Response log information may also be added, and recorded in the network recording platform after being signed.

10. The client obtains the corresponding data.

11. The client presents the sorted data to the user. For example, the medical information of the user in multiple medical institutions is gathered, classified, and organized, and then presented to the user as a whole.

Similarly, the above process can also be applied to an industry involving storage of data or records of a large amount of users, such as the electric industry, communication industry, electronic commerce industry or the like, which will not be described in detail herein.

Figure 15 is a schematic diagram illustrating a second application example of the technique according to the present disclosure.

3D printing is a hot technique nowadays, and it is also desired to solve the problem of how to ensure the security of authorized printing of a 3D model. As shown in Figure 15, the system for authorized printing of a 3D model may include a user, an authorization server, a client, a resource server, a network recording platform and a 3D printer. Specifically, the user is a natural person or an institution that purchases 3D model data. The client is third-party application software. The authorization server is a network transaction platform of 3D models. The resource server is a server of 3D model data. The network recording platform is the same as the network recording platform described above with reference to Figure 14. Further, although not shown, the system also includes the same key management center as the one described above with reference to Figure 14.

When the authorized printing of the 3D model is performed, the operations in steps 1 to 10 as shown in Figure 15 are the same as those in the corresponding steps in Figure 14 described above, which will not be repeated here. Next, in step 11, the client sends the data of the 3D model that is obtained by authorized access to the 3D printer, and in step 12, the user obtains the printed 3D item.

In the above process, the user obtains the authorization for printing a certain 3D model (which may be obtained for free or by transaction), accesses the authorization server and the resource server via the client, obtains the 3D model data by the method using authorization protocol according to the present disclosure, and sends the data to a 3D printer to yield the printed 3D item. By applying the technique according to the present disclosure, the security and non-repudiation of the authorized access can be guaranteed, and the network attack can be effectively resisted.

Although an application example of the technique according to the present disclosure has been given above with reference to Figure 14 and Figure 15, the present disclosure is not limited thereto and can also be applied to any other platform that requires authorization to access data.

Further, according to an embodiment of the present disclosure, an electronic device is further provided. The electronic device may include a transceiver and one or more processors. The one or more processors may be configured to perform the foregoing methods or the functions of the corresponding units according to the embodiments of the present disclosure.

It should be understood that, machine-executable instructions in a storage medium and a program product according to the embodiments of the present disclosure may further be configured to perform the method corresponding to the above-described device embodiment. Therefore, for the contents not described in detail here, reference may be made to the previous corresponding description, which is not repeated here.

Correspondingly, the storage medium used for carrying the program product including machine-readable instructions is included in the present disclosure. The storage medium includes but not limited to, a floppy diskette, an optical disk, a magneto-optical disk, a memory card, a memory stick and so on.

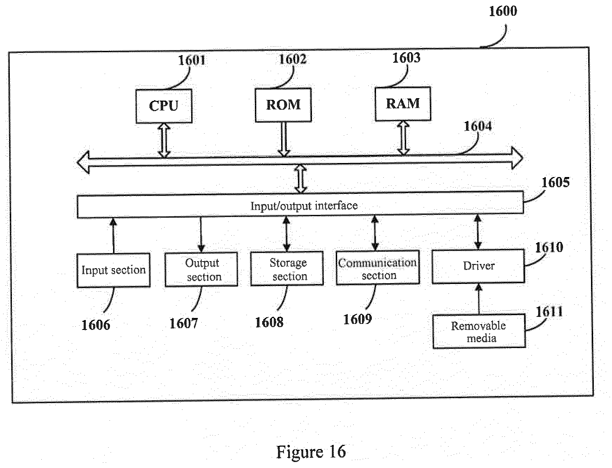

In addition, it should further be noted that, the above-described series of processing and apparatuses may also be implemented by software and/or firmware. In the case of software and/or firmware, program constituting the software is installed, via a storage medium or a network, onto the computer having a dedicated hardware structure, such as a general purpose computer 1600 shown in Figure 16. The computer, when installed with various programs, can execute various functions. Figure 16 is a block diagram illustrating an example structure of a personal computer as an information processing device that can be adopted in an embodiment of the present disclosure.

In Figure 16, a central processing unit (CPU) 1601 performs various processing according to the program stored in a read only memory (ROM) 1602 or the program loaded from the storage section 1608 to a random access memory (RAM) 1603. In the RAM 1603, the data required by CPU 1601 to execute various processing is also stored as necessary.

CPU 1601, ROM 1602 and RAM 1603 are linked to each other via a bus 1604. Input/output interface 1605 is also linked to the bus 1604.

The following components are linked to the input/output interface 1605: an input section 1606, including a keyboard, a mouse, etc.; an output section 1607, including a display, such as a cathode ray tube (CRT), a liquid crystal display (LCD), etc., and a speaker, etc.; a storage section 1608 including a hard disk, etc.; and a communication section 1609, including a network interface card such as a LAN card, a modem, etc.. The communication section 1609 performs a communication process via a network, such as the Internet.

A drive 1610 may also be linked to the input/output interface 1605 as needed. Removable media 1611, such as a magnetic disk, an optical disk, a magneto-optical disk, or a semiconductor memory, is mounted on the drive 1610 as needed, such that a computer program read out therefrom is installed into the storage section 1608 as needed.

In the case of implementing the above-described series of processing by software, the program constituting the software is installed via the network such as the Internet or a storage medium such as the removable media 1611.

It should be appreciated by those skilled in the art that, such storage medium is not limited to the removable media 1611 shown in Figure 16, which stores the program and is distributed separately from the apparatus to provide program to the user. The examples of the removable media 1611 include a magnetic disk (including a floppy disk (registered trademark)), an optical disk (including compact disc read-only memory (CD-ROM) and a digital versatile disk (DVD)), a magneto-optical disk (including a mini disc (MD) (registered trademark)) and a semiconductor memory. Alternatively, the storage medium may be a ROM 1602, a hard disk contained in the storage section 1608 and so on, which stores the program and is distributed to a user together with the apparatus containing them.

The preferred embodiments of the present disclosure have been described above in detail with reference to the accompanying drawings, whilst the present disclosure is not limited to the above examples, of course. A person skilled in the art may find various changes and modifications within the scope of the appended claims, and it should be understood that they will naturally come under the technical scope of the present disclosure.

For example, multiple functions included in one unit in the above embodiments may be implemented by separate apparatus. Alternatively, multiple functions implemented by multiple units in the above embodiments may be separately implemented by separate apparatus. In addition, one of the above functions may be implemented by multiple units. Needless to say, such a configuration is included in the technical scope of the present disclosure.

In this specification, the steps described in the flowchart include not only processing performed in the order in time series, but also processing parallel or individually and not necessarily performed in time series. Moreover, even in the step of processing in time series, needless to say, the order can be appropriately changed.

Although the present disclosure and its advantages have been described in detail, it should be understood that, various changes, substitutions and alterations can be made herein without departing from the scope of the disclosure as defined by the appended claims. Furthermore, the terms such as "include", "comprise" or any other variants thereof means to be non-exclusive. Therefore, a process, a method, an article or a device including a series of elements includes not only the disclosed elements but also other elements that are not clearly enumerated, or further includes inherent elements of the process, the method, the article or the device. Unless expressively limited, the statement "including a..." does not exclude the case that other similar elements may exist in the process, the method, the article or the device other than enumerated elements.

## Claims

1. A client device (200) for authorized access, which comprises a circuitry (210, 220, 230) and a memory, the circuitry being configured to:

   generate a request for authorized access to protected resources and send the request to a server device (300);
   record the request in a public database (100) which is a decentralized distributed database and in which records cannot be modified;
   verify a record of response information sent by the server device in response to the request, in the public database, utilizing a server public key, and
   perform corresponding operations for accessing the protected resources utilizing the response information, according to a result of the verifying.

2. The client device according to claim 1, wherein the circuitry is further configured to sign the request utilizing a client private key and send the signed request to the server device; and record the signed request in the public database.

3. The client device according to claim 1, wherein the circuitry is further configured to send location information of the request in the public database to the server device.

4. The client device according to claim 1, wherein the server device comprises an authorization server and a resource server, and
   wherein the request comprises a request for an authorization access credential sent to the authorization server, and the response information comprises the authorization access credential from the authorization server.

5. The client device according to claim 4, wherein the authorization access credential comprises limitation information related to the protected resources, and
   wherein the limitation information comprises an identifier of a manager for the protected resources, resources which are allowed to be accessed by the client device and a valid period of the authorization access credential.

6. The client device according to claim 5, wherein the limitation information further comprises setting of accessing times within the valid period, and the circuitry is configured to perform the corresponding operations for accessing the protected resources according to the setting of accessing times.

7. The client device according to claim 5, wherein the request comprises a data accessing request sent to the resource sever, and the response information comprises data resources from the resource server.

8. A server (300) device for authorized access, which comprises a circuitry (310, 320) and a memory, the circuitry being configured to:

verify a record of a request for authorized access to protected resources from a client (200) device in a public database (100) utilizing a client public key;
generate corresponding response information in response to the request, according to a result of the verifying, and send the response information to the client device; and
record the response information in a public database which is a decentralized distributed database and in which records cannot be modified.

9. The server device according to claim 8, wherein the circuitry is further configured to sign the response information utilizing a server private key and send the signed response information to the client device; and record the signed response information in the public database.

10. The server device according to claim 8, wherein the circuitry is further configured to send location information of the response information in the public database to the client device.

11. The server device according to claim 8, wherein the server device comprises an authorization server and a resource server,
wherein the request comprises a request for an authorization access credential sent to the authorization server, and the response information comprises the authorization access credential from the authorization server, and
wherein the authorization access credential comprises limitation information related to the protected resources.

12. The server device according to claim 11, wherein the limitation information comprises an identifier of a manager for the protected resources, resources which are allowed to be accessed by the client device and a valid period of the authorization access credential.

13. The server device according to claim 12, wherein the limitation information further comprises setting of accessing times within the valid period, and the circuitry is further configured to successively decrease the setting of accessing times according to access to the protected resources by the client device and record the decreased setting of accessing times in the public database.

**Patentansprüche**

1. Client-Einrichtung (200) für berechtigten Zugriff, die eine Schaltungsanordnung (210, 220, 230) und einen Speicher umfasst, wobei
die Schaltungsanordnung konfiguriert ist zum
Erzeugen einer Anforderung für berechtigten Zugriff auf geschützte Betriebsmittel und Senden der Anforderung zu einer Server-Einrichtung (300);
Aufzeichnen der Anforderung in einer öffentlichen Datenbank (100), die eine dezentrale verteilte Datenbank ist und in der Datensätze nicht modifiziert werden können;
Prüfen eines Datensatzes von Antwortinformationen, die durch die Server-Einrichtung in Reaktion auf die Anforderung gesendet wurden, in der öffentlichen Datenbank unter Verwendung eines öffentlichen Server-Schlüssels; und
Durchführen entsprechender Operationen zum Zugreifen auf die geschützten Betriebsmittel unter Verwendung der Antwortinformationen gemäß einem Ergebnis des Prüfens.

2. Client-Einrichtung nach Anspruch 1, wobei die Schaltungsanordnung ferner konfiguriert ist, die Anforderung unter Verwendung eines privaten Client-Schlüssels zu unterzeichnen, die unterzeichnete Anforderung zur Server-Einrichtung zu senden und die unterzeichnete Anforderung in der öffentlichen Datenbank aufzuzeichnen.

3. Client-Einrichtung nach Anspruch 1, wobei die Schaltungsanordnung ferner konfiguriert ist, Standortinformationen der Anforderung in der öffentlichen Datenbank zur Server-Einrichtung zu senden.

4. Client-Einrichtung nach Anspruch 1, wobei die Server-Einrichtung einen Berechtigungs-Server und einen Betriebsmittel-Server umfasst und
die Anforderung eine Anforderung eines Zugriffsberechtigungsnachweises, die zum Berechtigungs-Server gesendet wird, umfasst und die Antwortinformationen den Zugriffsberechtigungsnachweis vom Berechtigungs-Server umfassen.

5. Client-Einrichtung nach Anspruch 4, wobei der Zugriffsberechtigungsnachweis Beschränkungsinformationen in Bezug auf die geschützten Betriebsmittel umfasst und
die Beschränkungsinformationen eine Kennung eines Managers der geschützten Betriebsmittel, Betriebsmittel, auf die durch die Client-Einrichtung zugegriffen werden darf, und einen Gültigkeitszeitraum des Zugriffsberechtigungsnachweises umfassen.

6. Client-Einrichtung nach Anspruch 5, wobei die Beschränkungsinformationen ferner ein Einstellen von Zugriffszeiten im Gültigkeitszeitraum umfassen und die Schaltungsanordnung konfiguriert ist, die entsprechenden Operationen zum Zugreifen auf die geschützten Betriebsmittel gemäß der Einstellung von Zugriffszeiten durchzuführen.

7. Client-Einrichtung nach Anspruch 5, wobei die Anforderung eine Datenzugriffsanforderung umfasst, die zum Betriebsmittel-Server gesendet wird, und die Antwortinformationen Datenbetriebsmittel vom Betriebsmittel-Server umfassen.

8. Server-Einrichtung (300) für berechtigten Zugriff, die eine Schaltungsanordnung (210, 220, 230) und einen Speicher umfasst, wobei
die Schaltungsanordnung konfiguriert ist zum
Prüfen eines Datensatzes einer Anforderung für berechtigten Zugriff auf geschützte Betriebsmittel von einer Client-Einrichtung (200) in einer öffentlichen Datenbank (100) unter Verwendung eines öffentlichen Client-Schlüssels;
Erzeugen entsprechender Antwortinformationen in Reaktion auf die Anforderung gemäß einem Ergebnis des Prüfens und Senden der Antwortinformationen zur Client-Einrichtung und
Aufzeichnen der Antwortinformationen in einer öffentlichen Datenbank, die eine dezentrale verteilte Datenbank ist und in der Datensätze nicht modifiziert werden können.

9. Server-Einrichtung nach Anspruch 8, wobei die Schaltungsanordnung ferner konfiguriert ist, die Antwortinformationen unter Verwendung eines privaten Server-Schlüssels zu unterzeichnen, die unterzeichneten Antwortinformationen zur Client-Einrichtung zu senden und die unterzeichneten Antwortinformationen in der öffentlichen Datenbank aufzuzeichnen.

10. Server-Einrichtung nach Anspruch 8, wobei die Schaltungsanordnung ferner konfiguriert ist, Standortinformationen der Antwortinformationen in der öffentlichen Datenbank zur Client-Einrichtung zu senden.

11. Server-Einrichtung nach Anspruch 8, wobei die Server-Einrichtung einen Berechtigungs-Server und einen Betriebsmittel-Server umfasst,
die Anforderung eine Anforderung eines Zugriffsberechtigungsnachweises, die zum Berechtigungs-Server gesendet wird, umfasst und die Antwortinformationen den Zugriffsberechtigungsnachweis vom Berechtigungs-Server umfassen und
der Zugriffsberechtigungsnachweis Beschränkungsinformationen in Bezug auf die geschützten Betriebsmittel umfasst.

12. Server-Einrichtung nach Anspruch 11, wobei die Beschränkungsinformationen eine Kennung eines Managers der geschützten Betriebsmittel, Betriebsmittel, auf die durch die Client-Einrichtung zugegriffen werden darf, und einen Gültigkeitszeitraum des Zugriffsberechtigungsnachweises umfassen.

13. Server-Einrichtung nach Anspruch 12, wobei die Beschränkungsinformationen ferner ein Einstellen von Zugriffszeiten im Gültigkeitszeitraum umfassen und die Schaltungsanordnung ferner konfiguriert ist, die Einstellung von Zugriffszeiten gemäß dem Zugriff auf die geschützten Betriebsmittel durch die Client-Einrichtung sukzessive zu verringern und die verringerte Einstellung von Zugriffszeiten in der öffentlichen Datenbank aufzuzeichnen.

**Revendications**

1. Dispositif client (200) pour un accès autorisé, qui comprend des circuits (210, 220, 230) et une mémoire, les circuits étant configurés pour :

   générer une demande pour un accès autorisé à des ressources protégées et envoyer la demande à un dispositif serveur (300) ;
   enregistrer la demande dans une base de données publique (100) qui est une base de données décentralisée distribuée dans laquelle les enregistrements ne peuvent pas être modifiés ;
   vérifier un enregistrement d'informations de réponse envoyées par le dispositif serveur en réponse à la demande, dans la base de données publique, en utilisant une clé publique de serveur, et
   effectuer des opérations correspondantes pour accéder aux ressources protégées en utilisant les informations de réponse, en fonction d'un résultat de la vérification.

2. Dispositif client selon la revendication 1, dans lequel les circuits sont également configurés pour signer la demande en utilisant une clé privée de client et envoyer la demande signée au dispositif serveur ; et enregistrer la demande signée dans la base de données publique.

3. Dispositif client selon la revendication 1, dans lequel les circuits sont également configurés pour envoyer au dispositif serveur des informations d'emplacement de la demande qui se trouve dans la base de données publique.

4. Dispositif client selon la revendication 1, le dispositif serveur comprenant un serveur d'autorisations et un serveur de ressources, et
   dans lequel la demande comprend une demande concernant une référence d'accès d'autorisation envoyée au serveur d'autorisations, et les informations de réponse comprennent la référence d'accès d'autorisation provenant du serveur d'autorisations.

5. Dispositif client selon la revendication 4, dans lequel la référence d'accès d'autorisation comprend des informations de limitation relatives aux ressources protégées, et
   dans lequel les informations de limitation comprennent un identifiant d'un gestionnaire associé aux ressources protégées, les ressources auxquelles le dispositif client est autorisé à accéder et une période de validité de la référence d'accès d'autorisation.

6. Dispositif client selon la revendication 5, dans lequel les informations de limitation comprennent également le paramétrage des heures d'accès à l'intérieur de la période de validité, et les circuits sont configurés pour effectuer les opérations correspondantes pour accéder aux ressources protégées en fonction du paramétrage des heures d'accès.

7. Dispositif client selon la revendication 5, dans lequel la demande comprend une demande d'accès à des données envoyée au serveur de ressources, et les informations de réponse comprennent des ressources de données provenant du serveur de ressources.

8. Dispositif serveur (300) pour un accès autorisé, qui comprend des circuits (310, 320) et une mémoire, les circuits étant configurés pour :

   vérifier, dans une base de données publique (100), en utilisant une clé publique de client, un enregistrement d'une demande pour un accès autorisé à des ressources protégées provenant d'un dispositif client (200) ;
   générer des informations de réponse correspondantes en réponse à la demande, selon un résultat de la vérification, et envoyer les informations de réponse au dispositif client ; et
   enregistrer les informations de réponse dans une base de données publique qui est une base de données décentralisée distribuée dans laquelle les enregistrements ne peuvent pas être modifiés.

9. Dispositif serveur selon la revendication 8, dans lequel les circuits sont également configurés pour signer les informations de réponse en utilisant une clé privée de serveur et envoyer les informations de réponse signées au dispositif client ; et enregistrer les informations de réponse signées dans la base de données publique.

**10.** Dispositif serveur selon la revendication 8, dans lequel les circuits sont également configurés pour envoyer au dispositif client des informations d'emplacement des informations de réponse qui se trouvent dans la base de données publique.

**11.** Dispositif serveur selon la revendication 8, le dispositif serveur comprenant un serveur d'autorisations et un serveur de ressources,
dans lequel la demande comprend une demande concernant une référence d'accès d'autorisation envoyée au serveur d'autorisations, et les informations de réponse comprennent la référence d'accès d'autorisation provenant du serveur d'autorisations, et
dans lequel la référence d'accès d'autorisation comprend des informations de limitation relatives aux ressources protégées.

**12.** Dispositif serveur selon la revendication 11, dans lequel les informations de limitation comprennent un identifiant d'un gestionnaire associé aux ressources protégées, les ressources auxquelles le dispositif client est autorisé à accéder et une période de validité de la référence d'accès d'autorisation.

**13.** Dispositif serveur selon la revendication 12, dans lequel les informations de limitation comprennent également le paramétrage des heures d'accès à l'intérieur de la période de validité, et les circuits sont également configurés pour diminuer successivement le paramétrage des heures d'accès en fonction de l'accès aux ressources protégées par le dispositif client et enregistrer le paramétrage des heures d'accès ainsi diminué dans la base de données publique.

Figure 1

**200**

> Request generating unit
> **210**

> Recording unit
> **220**

> Accessing unit
> **230**

Figure 2

**300**

> Response generating unit
> **310**

> Recording unit
> **320**

Figure 3

Figure 4

Blockchain

Client device
200

Server device
300

Figure 5

Data record structure in blockchain ➡

| Address |
| --- |
| Signature of a content creator |
| Other application-related information |

Blockchain

| Addr 1 |
| --- |
| Signature of request |
| ... ... |

| Addr 2 |
| --- |
| Signature of response |
| Addr 1 |
| ... ... |

Figure 6

S701

Start

S702

A client device generates a request, signs the request, records the signed request in blockchain and obtains the location information of the record in the blockchain

S703

The client device sends the request and the location information of the request to a server device

S704

The server device retrieves the record of the request in the block chain based on the location information, and verifies the record by utilizing the client public key

S705

The record is valid?

No

Yes

S706

The server device generates response information, signs the response information, records the signed response information in the blockchain, and obtains location information of the record in the blockchain

End

S707

The server device sends the response information and location information of the response information to the client device

End

Figure 7

Figure 8

Figure 9

Figure 10

Blockchain

Figure 11A

Blockchain

Figure 11B

A client device generates a request for authorized access to protected resources and sends the request to the server device — S1201

The client device records the request in a public database — S1202

The client device performs corresponding operations for accessing the protected resources by utilizing response information from the server device — S1203

Figure 12

A server device generates response information and sends the response information to the client device — S1301

The server device records the response information in the public database — S1302

Figure 13

Figure 14

Figure 15

Figure 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510977455

**Non-patent literature cited in the description**

- **D HARDT.** *RFC 6749 The OAuth 2.0 Authorization Framework,* 31 October 2012, 1-76, https://www.rfc-editor.org/rfc/pdfrfc/rfc6749.txt.pdf

- **ANONYMOUS.** *Blockchain - Wikipedia,* 16 December 2015, https://en.wikipedia.org/w/index.php?title=Blockchain&oldid=695470105